# EUROPEAN PATENT APPLICATION

(11) **EP 4 008 738 A1**
(43) Date of publication of application: **08.06.2022**
(21) Application number: 20211251.2
(22) Date of filing: 02.12.2020
(51) Int. Cl.: C08G 59/14, C08G 59/50, C09D 163/00, C08G 81/02

(54) **HIGH MOLECULAR WEIGHT BLOCK COPOLYMERS**

(71) Applicant: CliQ SwissTech (Netherlands) B.V., 9747 AN Groningen (NL)
(72) Inventor: SLAGT, Vincent Friso, 9401 PV Assen (NL); LA CROIS, René Marcel, 9982 LG Uithuizemeeden (NL); SCHUURMANS, Eelco, 9201 EZ Drachten (NL)
(74) Representative: Fabry, Bernd

(57) **Abstract**

Suggested are high molecular weight co-polymers obtained from the reaction of specific bisglycidylethers and primary and/or secondary amines, optionally post-reacted with pigment affinity agents. The polymers are useful as dispersants, particularly high jet carbon black and organic pigments.

## Description

### AREA OF INVENTION

The present invention refers to the area of polymers and discloses new high molecular weight polymeric dispersants particularly for lacquers, paints and inks.

### BACKGROUND OF THE INVENTION

When a pigment is used as a colorant, for example for making an ink, such composition is prepared by mixing the concentrated pigment dispersion which contains pigment, water, dispersant and the like with water, resin, a water-soluble organic medium, and other ingredients.

In pigmented lacquer, paint or ink compositions, the pigment dispersion is generally stabilized by a dispersant serving to prevent the pigment particles from agglomerating and settling out of the carrier. While prior pigmented ink compositions showed acceptable stability for the pigment dispersion, improved pigment ink dispersion is still needed for example to further lower the ink viscosity, impart better print density, increase pigment loading, and lower degree of shear thinning after aging.

### RELEVANT PRIOR ART

EP 1486524 B1 (BYK) relates to addition compounds suitable for use as wetting agents and dispersants and obtainable by reacting monofunctional or polyfunctional aromatic epoxides with polyoxyalkylene monoamines having a number-average molecular weight of>400 g/mol, one primary or secondary amino group and at least 4 ether oxygen atoms per molecule, from 90 to 100 percent of the epoxide groups of the starting material having undergone reaction, the weight fraction of aromatic groups in the addition compounds being not more than 50 percent and the addition compounds containing per molecule at least one amino group on which salts can be formed, or being present as a salt.

EP 1650246 B1 (BYK) covers alkoxylated epoxide-amine adducts having a number-average molecular weight of more than 500 g/mol, which are obtained by reacting A) mono- and/or polyepoxides having at least 8 carbon atoms with B) primary and/or secondary amines and/or primary and/or secondary alkanolamines and/or secondary alkylalkanol amines, to form an adduct having one or more secondary OH groups, and subsequently alkoxylating the adduct with C) alkylene oxides.

EP 2510034 B1 (BYK) discloses addition compounds suitable as wetting and dispersing agent, obtainable from the reaction of A) polyepoxides with B) at least one primary polyoxyalkyleneamine C) at least one other aliphatic and/or araliphatic primary amine and D) at least one modified isocyanate.

WO 2016 059066 A1 (BYK) relates to comb copolymers, which can be produced from at least one bisglycidylether (A), at least one polyether monoamine (B) at least one amine (C) and optionally at least one secondary amine (D) that is free of primary amino groups

WO 2018 184961 B1 (BYK) proposes epoxide-amine adducts obtainable by reaction of one or more primary amines (A) with one or more monoepoxide (B), wherein (i) the primary amine(s) (A) and the monoepoxide(s) (B) are reacted in an equivalents ratio (A):(B) of from 1:2 to 1:1.35; and (ii) at least 40 mol percent of the radicals R are selected from aromatic radicals having 6 to 18 carbon atoms and araliphatic radicals having 7 to 24 carbon atoms.

EP 1745104 B1**,** EP 2069434 B1 and EP 2199338 B1 (HUNTSMAN) provide compositions useful as ink which contain novel dispersants having a comb-like polyetheralkanolamine structure that are capable of dispersing pigments which are traditionally difficult to disperse while maintaining acceptable levels of viscosity.

### OBJECT OF THE INVENTION

Therefore, it has been the object of the present invention providing new high molecular weight polymeric dispersants with 100 percent active matter, which are low viscous, easy to handle, labelling and VOC-free and particularly useful for dispersing high jet carbon black and organic pigments.

### BRIEF DESCRIPTION OF THE INVENTION

A first object of the present invention refers to polymeric dispersants obtained according to the following steps:
(a) providing at least one bisglycidylether (component a) according to formula (I) 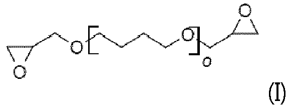 in which "o" means an integer ranging from 1 to about 100,
(b) providing at least one primary or secondary amine (component b) of formula (II)

   R¹NHR² and/or R³NHR⁴ (II)

   in which R¹, R², R³ and R⁴ independently from each other stand for hydrogen or an (X)-(Y)-group, on condition that R¹ and R² on one hand and R³ and R⁴ on the other cannot represent hydrogen at the same time;
   X represents: a linear or branched, saturated or unsaturated, optionally hydroxysubstituted hydrocarbyl radical having 1 to about 20 carbon atoms; and
   Y represents: -hydrogen; -OH; -O(CH₂CH(CH₃)O)ₙ(CH₂CH₂O)ₘR^{#} (R^{#} representing hydrogen or methyl, n representing zero or an integer of from 1 to about 20, and m an integer of from 1 to about 75); -NH₂; -NR*R** (R* and R** independently from each other representing linear or branched alkyl or hydroxy alkyl radicals having 1 to 10 carbon atoms, optionally forming a ring structure including additional nitrogen and/or or oxygen atoms); -phenyl; -amino(alkyl)phenyl; or mixtures thereof; and optionally
(c) providing at least one quaternization agent (component c),
(d) blending compounds (a), (b) and optionally (c) and subjecting them to condensation.

In a preferred embodiment the condensation products thus obtained are further reacted with at least one pigment affinity agent (component d) selected from the group consisting of unsaturated carboxylic acids or their esters, carboxylic acid anhydrides, alkylglycidylethers, or mixtures thereof.

Another object of the present invention refers to a process for obtaining polymeric dispersants comprising or consisting of the following steps:
(a) providing at least one bisglycidylether (component a) according to formula (I) 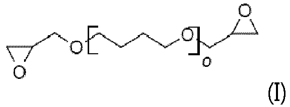 in which "o" means an integer ranging from 1 to about 100,
(b) providing at least one primary or secondary amine (component b) of formula (II)

   R¹NHR² and/or R³NHR⁴ (II)

   in which R¹, R², R³ and R⁴ independently from each other stand for hydrogen or an (X)-(Y)-group, on condition that R¹ and R² on one hand and R³ and R⁴ on the other cannot represent hydrogen at the same time;
   X represents: a linear or branched, saturated or unsaturated, optionally hydroxysubstituted hydrocarbyl radical having 1 to about 20 carbon atoms; and
   Y represents: -hydrogen; -OH; -O(CH₂CH(CH₃)O)ₙ(CH₂CH₂O)ₘR⁴ (R^{#} representing hydrogen or methyl, n representing zero or an integer of from 1 to about 20, and m an integer of from 1 to about 75); -NH₂; -NR*R** (R* and R** independently from each other representing linear or branched alkyl or hydroxy alkyl radicals having 1 to 10 carbon atoms, optionally forming a ring structure including additional nitrogen and/or or oxygen atoms); -phenyl; -amino(alkyl)phenyl; or mixtures thereof; and optionally
(c) providing at least one quaternization agent (component c),
(d) blending compounds (a), (b) and optionally (c) and subjecting them to condensation.

In a preferred embodiment the polymer of step (d) is reacted with at least one pigment affinity agent (component d) selected from the group consisting of unsaturated carboxylic acids or their esters, carboxylic acid anhydrides, alkylglycidylethers, or mixtures thereof.

Surprisingly, it was found that the new co-polymers show
- very low pigment concentrate viscosity
- excellent pigment wetting
- reduced grinding times
- excellent pigment stability, color strength and jetness, and
- superior transparency.

Further on, the new co-polymers are labelling and VOC-free.

### Bisglycidylethers

Bisglycidylethers forming component (a) are obtainable by standard operations of organic chemistry and available in the market. In terms of the present invention two glycidyl groups are linked by a spacer, said spacer representing a tetramethylenoxide unit.

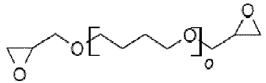

The ethers may include a single unit or a linear chain up to 100 units expressed by the term "o" which stands for an integer starting from up to 100. The preferred ethers, however, include about 2 to about 50, and more preferably about 5 to about 10 units. The most preferred species is IPOX RD21 (IPOX Chemicals).

### Amines

The epoxide rings of the bisglycidylethers are opened by means of primary or secondary amines or diamines (component b). It is possible to use a single amine or mixture of for example two different amines.

In a first embodiment said primary amines follow general formula (III)

H₂N-(A)-O(PO)ₙ(EO)ₘB (III)

wherein (A) stands für a linear or branched alkylene radical having 1 to 6 carbon atoms, B stands for hydrogen or methyl, PO stands for a propylene oxide unit, EO stands for an ethylene oxide unit, n means zero or an integer of from 1 to about 20, and m an integer of from 1 to about 75. These products represent (methanol-started) polyalkyleneglycol ethers with a terminal primary amino group. The polyalkyleneglycol chain consists of ethylene oxide units or mixtures of propylene oxide and ethylene oxide units (random or block). For example the terminal primary amino group is a 1- or 2-aminopropyl radical and the polyalkylene glycol chain contains about 5 to about 15 PO and about 20 to about 50 EO units. Such products are available in the market from the company Huntsman and sold under the trademark Surfonamine^{®} (e.g. L207, B60, B200, L100, and L300).

In a second embodiment the primary amines (component b) represent alkylamines, hydroxy alkylamines, arylamines or aralkylamines preferably selected from the group consisting of methyl amine, ethylamine, propylamine, butylamine, pentylamine, hexylamine, ethanolamine, propamolamine, butanolamine, benzylamine or mixtures thereof.

In a third embodiment the primary amines (component b) represent diamines preferably selected from the group consisting of dimethylaminopropylamine, aminopropylimidazolin, xylenediamine, hexamethylenediamine or mixtures thereof.

In a fourth embodiment the secondary amines are selected from the group consisting of dimethylamine, diethylamine, dipropylamine, dibutylamine, dipropylamine, dihexylamine and mixtures thereof.

Said bisglycidylethers can be converted into the high molecular weight co-polymers by condensation with one, two or more different primary or secondary amines or diamines. Typically, components (a) and (b) are reacted in a molecular weight ranging from about 1:0.8 to about 1:2.0 and preferably from about 1:1.0 to about 1:1.2.

### Quaternization agents

In a preferred embodiment of the present invention the resulting high weight molecular co-polymers are quaternized. Quaternization is achieved by condensing said bisglycidylethers with a mixture of said primary or secondary amines and/or diamines a quaternization agents (component c). These agents can be selected from the group consisting of alkyl chloride, amineoxide, dialkylcarbonates, carboxylic acids and carboxylic acid amides and mixtures thereof. A preferred carboxylic acid is benzoic acid, which means that after quaternization the reaction products are present as benzoates as shown for Products Q, R and S in the experimental part of this application.

Typically, components (a) and (b+c) are reacted in a molecular weight ranging from about 1:0.8 to about 1:2.0 and preferably from about 1:1.0 to about 1:1.2. The molar ratio between components (b) and (c) typically ranges from about 1:1 to about 5:1 and preferably from about 2:1 to about 3:1.

### Pigment affinity agents

In another preferred embodiment of the present invention the high molecular weight co-polymers obtained from condensation of bisglydicylethers (component a) with amines (component b) and optionally quaternization agents (component c) can be further modified by post-reacting the co-polymers with so-called pigment affinity agents (component d). These agents can be selected from the group consisting of methylacrylate, ethylacrylate, propylacrlate, butylacrylate, hexyl(meth)acrylate, octyl(meth)acrylate, 2-ethylhexyl(meth)acrylate, 2-ethylhexylglycidylether, decylglycidylether, dodecylglycidylether, acetanhydride, maleic anhydride, trimellitic anhydride and mixtures thereof.

The pigment affinity agents attack free hydroxyl and/or amine groups in the condensate as shown in Products F to M in the experimental part of the application. Co-polymers modified with these agents show improved performance with regard to pigment stabilization.

Typically, about 1 mol co-polymer obtained as explained above is reacted with about 0.1 to 0.5 and preferably about 0.2 to about 0.25 mol pigment affinity agents.

### Condensation process

The high molecular weight co-polymers are obtained in a simple condensation process. Typically, components (a), (b) and optionally (c) are placed in a reactor and heated to a temperature ranging from about 80 to about 160 °C and preferably about 100 to about 150 °C. The reaction is preferably conducted under inert conditions, for example under nitrogen. It is preferred charging the reactor with components (b) and optionally (c), heating the mixture to about 100 °C, adding component (a) and then heating the mixture to the end temperature. The condensation requires typically 4 to 6 hours (to be followed by IR and NMR). Subsequently the final co-polymers are cooled and canned.

### Preferred co-polymers

Additional embodiments of the present invention refer to at least one of the following structures:

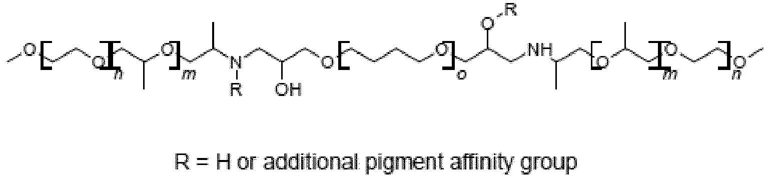

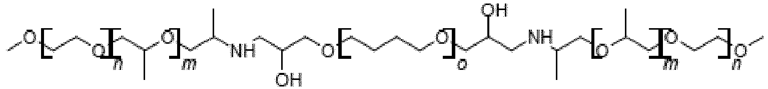

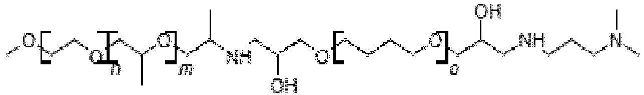

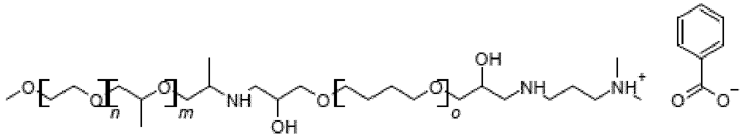

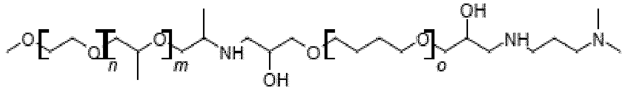

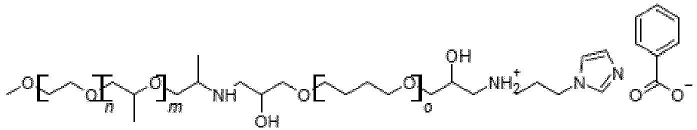

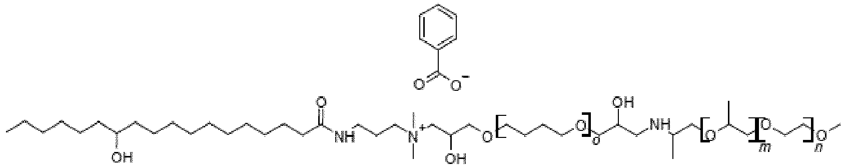

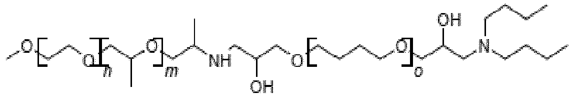

### INDUSTRIAL APPLICATION

Another object of the present invention is related to a method for dispersing a solid pigment in a liquid lacquer or paint or ink encompassing or consisting of the following steps:
(i) providing a liquid lacquer or paint or ink comprising solid pigments,
(ii) adding a working amount of at least one co-polymer as described above optionally under agitation.

A "working amount" means that the amount is sufficient to disperse the solid pigments in the liquid phase without visible separation for a period of at least 3 months. Such amount is typically about 0.1 to about 5 wt.-percent, preferably about 0.5 to 3 wt.-percent and more preferably about 1 to about 2 wt.-percent - referring to the polymer without solvent and calculated on the lacquer or paint composition.

Also claimed is the use of the co-polymers as described above as dispersants, particularly for liquid lacquers, paints or inks.

### EXAMPLES

### Manufacturing Examples 1 to 5

The following Products A to E were synthesized from Poly(tetramethylenoxide)-diglycidylether (IPOX RD21) which was reacted with several amines (Surfonamine L207, B60, B200, L100, L300) according to the following reaction scheme:

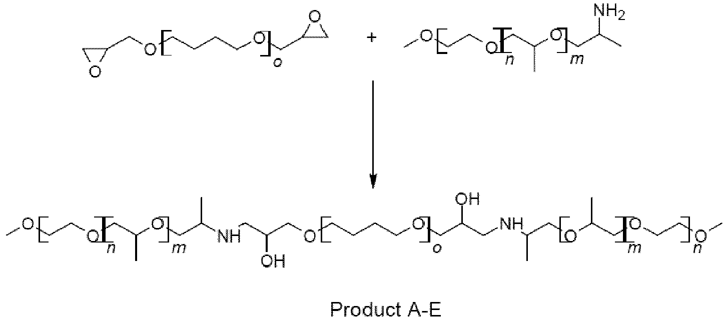

### Product A

200 g Surfonamine L207 (0.10 mol; methanol-started polyether monoamine with terminal primary amino group, about 10 PO and 33 EO units, manufacturer Huntsman) was charged in a reactor and heated to 100 °C under a nitrogen atmosphere. 43.2 g IPOX RD21 (0.10 mol; Poly(tetramethylenoxide)-diglycidylether, manufacturer Ipox) is added and the mixture was further heated to 145 °C and reacted for 7 hours. The product was cooled and canned.

### Product B

120 g Surfonamine B60 (0.20 mol; methanol-started polyether monoamine with terminal primary amino group, about 9 PO and 1 EO units, manufacturer Huntsman) was charged in a reactor and heated to 100 °C under a nitrogen atmosphere. 83.4 g IPOX RD21 (0.20 mol) was added and the mixture is further heated to 160 °C and reacted for 4 hours. The product was cooled and canned.

### Product C

200 g Surfonamine B200 (0.10 mol; methanol-started polyether monoamine with terminal primary amino group, about 29 PO and 6 EO units, manufacturer Huntsman) was charged in a reactor and heated to 100 °C under a nitrogen atmosphere. 41.7 g IPOX RD21 (0.10 mol) was added and the mixture is further heated to 160 °C and reacted for 1 hour. The product was cooled and canned.

### Product D

100 g Surfonamine L100 (0.10 mol; methanol-started polyether monoamine with terminal primary amino group, about 3 PO and 19 EO units, manufacturer Huntsman) was charged in a reactor and heated to 100 °C under a nitrogen atmosphere. 41.7 g IPOX RD21 (0.10 mol) was added and the mixture is further heated to 160 °C and reacted for 4 hours. The product was cooled and canned.

### Product E

150 g Surfonamine L300 (0.050 mol; methanol-started polyether monoamine with terminal primary amino group, about 8 PO and 58 EO units, manufacturer Huntsman) was charged in a reactor and heated to 100 °C under a nitrogen atmosphere. 20.9 g IPOX RD21 (0.050 mol) was added and the mixture is further heated to 150 °C and reacted for 6 hours. The product was cooled and canned.

### Manufacturing Examples 6 to 13

The following Products F-M are modifications of product A with various additional pigment affinity groups. Basically, product A is reacted with
F: ethylhexyl acrylate [CAS 103-11-7]
G: IPOX RD24, C12-C14-glycidylether [CAS 68609-97-2]
H: IPOX RD17, 2-ethyl-hexyl-glycidylether [CAS 2461-15-6]
I: trimellitic anhydride [CAS 552-30-7]
J-M: various amounts of maleic anhydride [CAS 108-31-6]

### Product F

121.6 g Product A and 4.61 g 2-ethylhexyl acrylate (0.025 mol) were charged in a reactor and heated to 110 °C under a nitrogen atmosphere. The mixture was stirred for 6 hours and reaction was monitored by IR and NMR. The product was cooled and canned.

### Product G

121.6 g Product A and 7.18 g IPOX RD24 (0.025 mol, C12-C14-glycidylether, manufacturer Ipox) were charged in a reactor and heated to 160 °C under a nitrogen atmosphere. The mixture was stirred for 6 hours and reaction was monitored by IR. The product was cooled and canned.

### Product H

121.6 g Product A and 5.5 g IPOX RD17 (0.025 mol, 2-Ethyl-Hexyl-glycidylether, manufacturer Ipox) were charged in a reactor and heated to 160 °C under a nitrogen atmosphere. The mixture was stirred for 6 hours and reaction was monitored by IR. The product was cooled and canned.

### Product I

113.9 g Product A and 2.234 g trimellitic anhydride (0.0116 mol) were charged in a reactor and heated to 160 °C under a nitrogen atmosphere. The mixture was stirred for 20 minutes until all trimellitic anhydride was dissolved. The product was cooled and canned.

### Product J

100 g Product A and 1.0 g maleic anhydride (0.010 mol) were charged in a reactor and heated to 60 °C under a nitrogen atmosphere. The mixture was stirred for 20 minutes until all maleic anhydride was dissolved. The reaction progress was monitored by IR. The product was cooled and canned.

### Product K

100 g Product A and 2.0 g maleic anhydride (0.020 mol) were charged in a reactor and heated to 60 °C under a nitrogen atmosphere. The mixture was stirred for 20 minutes until all maleic anhydride was dissolved. The reaction progress was monitored by IR. The product was cooled and canned.

### Product L

100 g Product A and 3.0 g maleic anhydride (0.031 mol) were charged in a reactor and heated to 60 °C under a nitrogen atmosphere. The mixture was stirred for 20 minutes until all maleic anhydride was dissolved. The reaction progress was monitored by IR. The product was cooled and canned.

### Product M

100 g Product A and 4.0 g maleic anhydride (0.041 mol) were charged in a reactor and heated to 60 °C under a nitrogen atmosphere. The mixture was stirred for 20 minutes until all maleic anhydride was dissolved. The reaction progress was monitored by IR. The product was cooled and canned.

### Manufacturing Examples 14 to 20

The following Products N-T: are versions of IPOX RD21, Poly(tetramethylen-oxid)-diglycidylether [CAS 26951-52-0] reacted with Surfonamine L207 [CAS 83713-01-3] and ...
N: dimethylaminopropylamine (DMAPA) [CAS 109-55-7]
O: dimethylaminopropylamine (DMAPA) [CAS 109-55-7] + benzoic acid [CAS 65-85-0]
P: 3-aminopropyl imidazole (API), [CAS 5036-48-6]
Q: 3-aminopropyl imidazole (API), [CAS 5036-48-6] + benzoic acid [CAS 65-85-0]
R: Amine O [CAS 95-38-5] → quaternized product
S: N-[3-(Dimethylamino)propyl]-12-hydroxyoctadecanamide [CAS 75656-34-7] → quaternized product
T: Dibutylamine [CAS 111-92-2]

### Product N

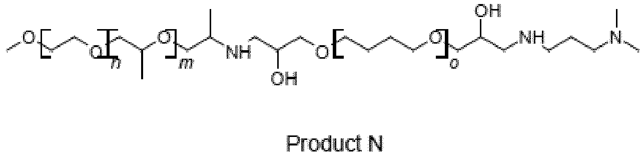

150 g Surfonamine L207 (0.075 mol) and 2.56 g 3-dimethylaminopropylamine (0.025 mol) were charged in a reactor and heated to 100 °C under a nitrogen atmosphere. 43.2 g IPOX RD21 (0.10 mol) was added and the mixture was further heated to 145 °C and reacted for 6 hours. The product was cooled and canned.

### Product O

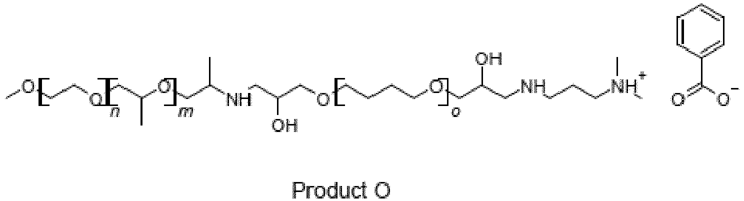

150 g Surfonamine L207 (0.075 mol), 2.56 g 3-dimethylaminopropylamine (0.025 mol), 3.05 g benzoic acid (0.025 mol) were charged in a reactor and heated to 100 °C under a nitrogen atmosphere. 43.2 g IPOX RD21 (0.10 mol) was added and the mixture was further heated to 130 °C and reacted for 2 hours minutes. The product was cooled and canned.

### Product P

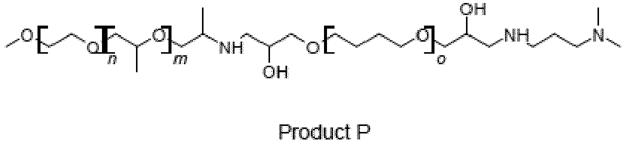

150 g Surfonamine L207 (0.075 mol) and 3.13 g 3-aminopropylimidazole (0.025 mol) were charged in a reactor and heated to 100 °C under a nitrogen atmosphere. 43.2 g IPOX RD21 (0.10 mol) was added and the mixture was further heated to 145 °C and reacted for 4 hours. The product was cooled and canned.

### Product Q

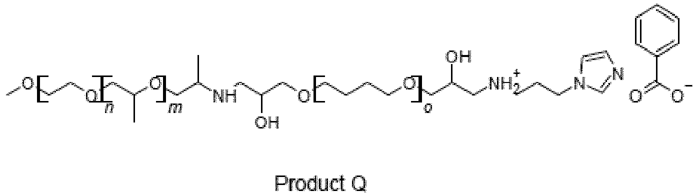

150 g Surfonamine L207 (0.075 mol), 3.13 g 3-aminopropylimidazole (0.025 mol), 3.05 g benzoic acid (0.025 mol) were charged in a reactor and heated to 100 °C under a nitrogen atmosphere. 43.2 g IPOX RD21 (0.10 mol) was added and the mixture was further heated to 160 °C and reacted for 40 minutes. The product was cooled and canned.

### Product R

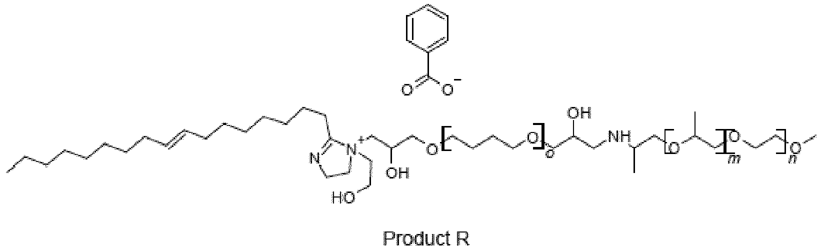

92.1 g Surfonamine L207 (0.0461 mol), 5.38 g Amine O (0.0154 mol), 1.88 g benzoic acid (0.0154 mol) were charged in a reactor and heated to 100 °C under a nitrogen atmosphere. 25.6 g IPOX RD21 (0.0614 mol) was added and the mixture was further heated to 150 °C and reacted for 1 hour and 45 minutes. The product was cooled and canned.

### Product S

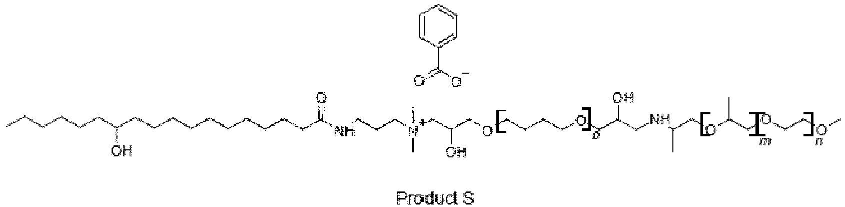

150 g Surfonamine L207 (0.075 mol), 9.95 g N-[3-(Dimethylamino)propyl]-12-hydroxyoctadecanamide (0.025 mol), 3.05 g benzoic acid (0.025 mol) were charged in a reactor and heated to 100 °C under a nitrogen atmosphere. 41.7 g IPOX RD21 (0.10 mol) was added and the mixture was further heated to 150 °C and reacted for 2 hours. The product was cooled and canned.

### Product T

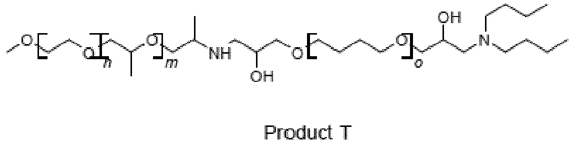

150 g Surfonamine L207 (0.075 mol) and 9.693 g dibutylamine (0.075 mol) were charged in a reactor and heated to 100 °C under a nitrogen atmosphere. 62.6 g IPOX RD21 (0.15 mol) was added and the mixture was further heated to 150 °C and reacted for 5 hours. The product was cooled and canned.

### Comparative Examples

C1 is Example 6 taken from EP 2274340 B1 and used as a standard reference and is a polymeric block co-polymer based dispersing agent for aqueous coatings and pigment concentrates.

C2 is Example 1 taken from EP 3207075 A1 and represents an epoxy/amine-based copolymer suitable as a wetting agent and dispersant. The basic chemistry is alike Product A, but the epoxy backbone is different.

C3 is Example 1 taken from EP 3106496 A1 and represents a polymeric block co-polymer especially applied for the dispersion of carbon black based pigments used in aqueous coatings, printing inks or adhesives.

### Application Example 1

### Dispersion of high color carbon blacks

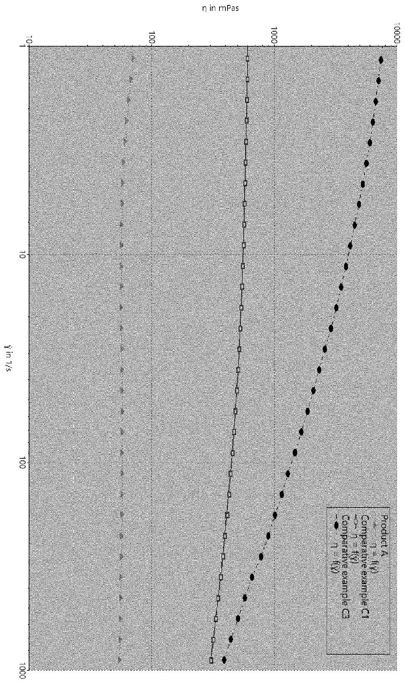

Pigment concentrates for water based application based of carbon black pigments were prepared comprising Product A and a comparative dispersants C1-C3 from the market. The compositions and performances are provided in **Table 1,** the flow behaviors of the compositions are depicted in **Figure 1****.**

Evaluation of the pigment paste samples was done by comparing viscosity and color development. Viscosity wass measured via flow curve on rheometer, comparing viscosity at shear rates; 10 s-1, 100s-1 and 500 s-1. Color development was measured via reduction in a water based clear coat (GF-W021A). The mixture (5% carbon black pigment on resin solids), based 30g total weight, was mixed for 3 minutes using skandex and draw-down is made with 150µ block applicator on leneta b/w-card. The coating was dried overnight at room temperature and recoated with transparent 2K PU coating. After overnight drying at room temperature color performance was measured using X-rite Ci 7600. As the Mc value increases, the jetness of the masstone increased and therewith the visual appearance of deeper black was archived. Higher value for dM exhibited a more bluish undertone which is often preferred. Via silver reduction the color strength of the paste was measured. 1% Carbon black pigment paste was mixed with an aqueous refinish coating based aluminum pigment paste. Draw-down was made with 150µ block applicator on leneta b/w-card and recoated with transparent 2K PU coating. After overnight drying at room temperature the tinting strength was measured.

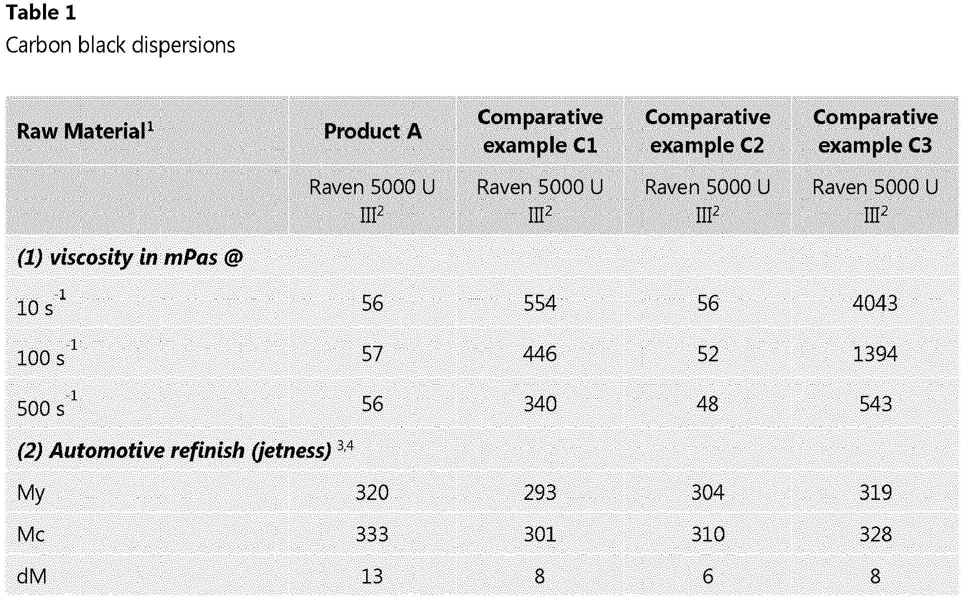

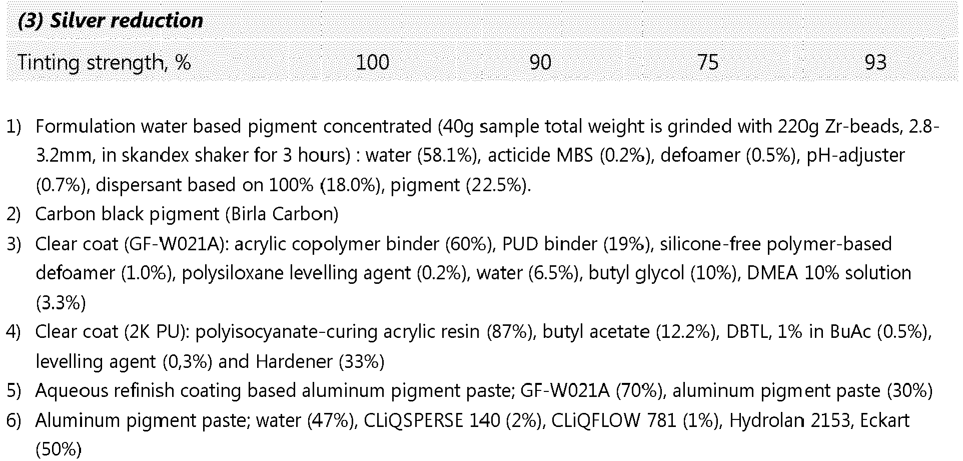

**Figure 1** shows the flow behaviors of the composition at pigment loadings of 25 wt.-percent as a function of viscosity and shear rate. The significantly lower viscosity based product A allows higher pigment load in final pigment paste preparation. Based on the results from application example it was made clear that the co-polymers according to the present invention as dispersant outperformed comparative examples C1-C3. The superior behavior of product A provides a very low pigment concentrate viscosity and higher jetness with more bluish undertone. In addition, a very high tinting strength in a silver reduction was observed. Pigment concentrates for water based application based of carbon black pigment Emperor 2000, showed similar superior behavior for product A, especially towards silver reduction, namely 100% vs. 85% for comparative example C1, 72% for comparative example C2 and 78% for comparative example C3.

### Application Example 2

### Dispersion of high color carbon blacks

Further functionalization with acrylates or glycidyl ethers also gave good performing products. As typical examples Product F and G were tested in pigment concentrates for water based application based of a carbon black. The compositions and performances are provided in **Table 2.** It is shown that the typical examples Product F and G also showed improved performance on jetness in comparison to the samples from application example 1.

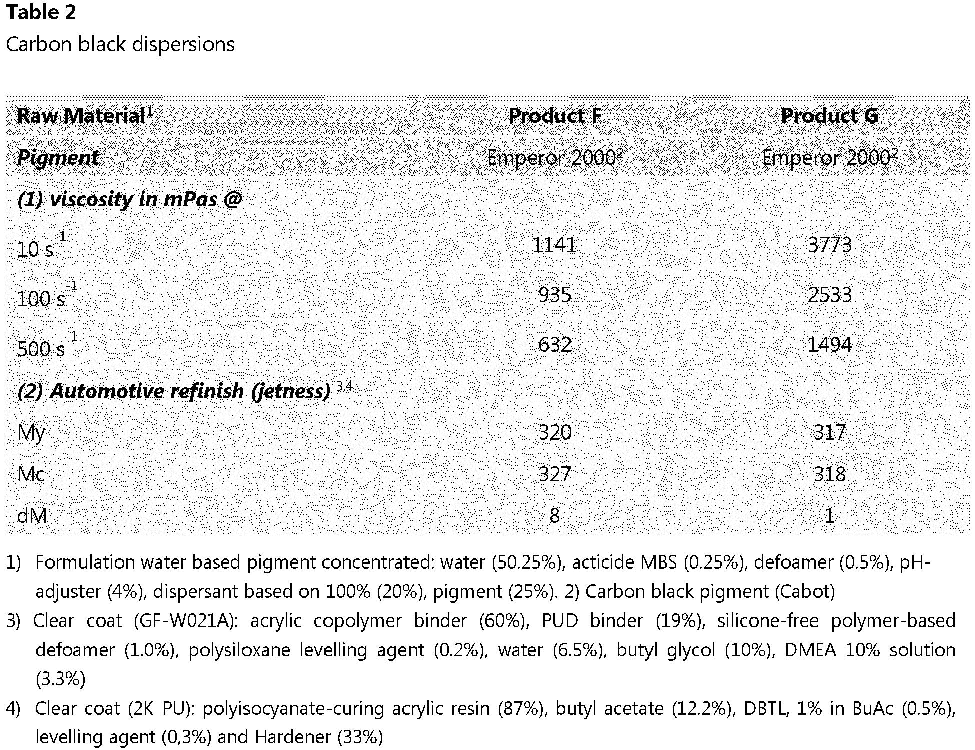

### Application Example 3

### Dispersion of high color carbon blacks

Functionalization with specific pigment affinity groups were tested with high color carbon blacks. Pigment concentrates for water based application based of a carbon black were prepared comprising Product J, K, L as typical examples. The compositions and performances are provided in **Table 3.**

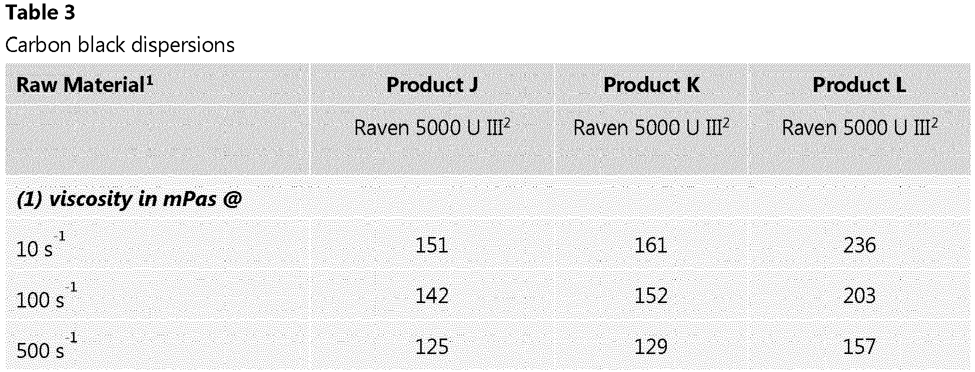

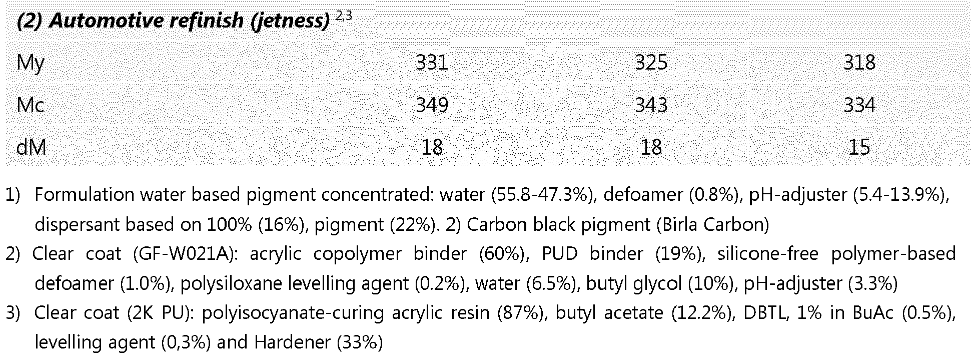

Functionalization with specific pigment affinity groups Product K and L and especially typical Product J, showed a remarkable improvement in jetness along with a reduced viscosity. Showing that the functionalization with pigment affinity groups can further improve the product performance in pigment concentrates.

### Application Example 4 and 5

### Dispersion of violet and red pigments

The co-polymers according to the present invention were also tested in concentrates based organic pigment for tinting comprising a pigment violet, PV 23, and were tested against comparative examples C1 to C3. The tested formulation of the water based pigment concentrated consisted of the following: water (60.5%), acticide MBS (0.2%), defoamer (0.5%), pH-adjuster (0.8%), dispersant based on 100% (8.0%), pigment¹ (30.0%). ¹) Hostaperm Violet RL special (Clariant). All materials showed similar performance in relation to viscosity dispersing pigment PV 23. As a typical example polymer A was tested in white reduction with water based coating. The material of the present invention showed similar color development compared to C1, but significant improved tinting strength were observed over comparative example C2 (92%) and comparative example C3 (86%).

The co-polymers according to the present invention were also tested in concentrates based organic pigment for tinting comprising a pigment red, PR 168, and were tested against comparative examples C1 and C3. The tested formulation of the water based pigment concentrated consisted of the following: water (59.5%), defoamer (0.5%), pH-adjuster (2.0%), dispersant based on 100% (8.0%), pigment¹ **(30.0%).** ¹) Hostaperm Scarlet GO (Clariant). The viscosities of the red pigment paste were respectively 674 mPas (10 s-1) and 230 mPas (500 s-1) for the present invention, and 443 mPas (10 s-1) and 183 mPas (500 s-1) for comparative example C3 showing a low pigment viscosities. In contrast, comparative example C1 yielded undesired high product viscosity of 3079 mPas (10 s-1) and 494 mPas (500 s-1).

The let down in air dry acrylic paint with a PVC (Pigment Volume Concentration) of 19% mixed with 5% pigment concentrate, for the present invention a tinting strength 100%, rub TS 99% and rub out dE 0.8 was found. Comparative Example C1 gave a lower tinting strength 95%, rub TS 96% and rub out dE 0.7. Also, a somewhat lower performance was observed upon using comparative example C3 which gave a tinting strength of 97%, rub TS of 94% and rub out dE of 0.9.

Additional experiments in a let-down based full shade with aqueous refinish gave for the present invention chroma (58.0) and hue (26.6), versus chroma (56.8) and hue (25.9) for comparative example C1 and chroma (56.8) and hue (26.2) for comparative example C3. The results show again the improved color performance of the present invention. Interesting results were also found based application of the full shade on transparent foil, measuring haze (transparency). Here the typical example of the present invention showed a haze of only 12%, compared to comparative example C1 (28%) and C3 (17%). Summarizing, the concentrate with the co-polymer according to the present invention showed low pigment concentrate viscosity, excellent color development, superior transparency, and good storage stability with PR 168.

## Claims

1. High molecular weight co-polymers obtained according to the following steps:
(a) providing at least one bisglycidylether (component a) according to formula (I) 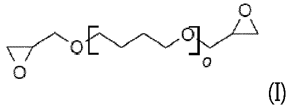 in which "o" means an integer ranging from 1 to about 100,
(b) providing at least one primary or secondary amine (component b) of formula (II)
R¹NHR² and/or R³NHR⁴ (II)
in which R¹, R², R³ and R⁴ independently from each other stand for hydrogen or an (X)-(Y)-group, on condition that R¹ and R² on one hand and R³ and R⁴ on the other cannot represent hydrogen at the same time;
X represents: a linear or branched, saturated or unsaturated, optionally hydroxysubstituted hydrocarbyl radical having 1 to about 20 carbon atoms; and
Y represents: -hydrogen; -OH; -O(CH₂CH(CH₃)O)ₙ(CH₂CH₂O)ₘR^{#} (R^{#} representing hydrogen or methyl, n representing zero or an integer of from 1 to about 20, and m an integer of from 1 to about 75); -NH₂; -NR*R** (R* and R** independently from each other representing linear or branched alkyl or hydroxy alkyl radicals having 1 to 10 carbon atoms, optionally forming a ring structure including additional nitrogen and/or or oxygen atoms); -phenyl; -amino(alkyl)phenyl; or mixtures thereof; and optionally
(c) providing at least one quaternization agent (component c),
(d) blending compounds (a), (b) and optionally (c) and subjecting them to condensation.

2. The dispersants of Claim 1, further reacted with at least one pigment affinity agent (component d) selected from the group consisting of unsaturated carboxylic acids or their esters, carboxylic acid anhydrides, alkylglycidylethers, or mixtures thereof.

3. A process for obtaining high molecular weight co-polymers comprising or consisting of the following steps:
(a) providing at least one bisglycidylether (component a) according to formula (I) 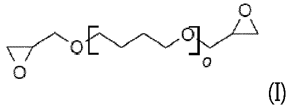 in which "o" means an integer ranging from 1 to about 100,
(b) providing at least one primary or secondary amine (component b) of formula (II)
R¹NHR² and/or R³NHR⁴ (II)
in which R¹, R², R³ and R⁴ independently from each other stand for hydrogen or an (X)-(Y)-group, on condition that R¹ and R² on one hand and R³ and R⁴ on the other cannot represent hydrogen at the same time;
X represents: a linear or branched, saturated or unsaturated, optionally hydroxysubstituted hydrocarbyl radical having 1 to about 20 carbon atoms; and
Y represents: -hydrogen; -OH; -O(CH₂CH(CH₃)O)ₙ(CH₂CH₂O)ₘR^{#} (R^{#} representing hydrogen or methyl, n representing zero or an integer of from 1 to about 20, and m an integer of from 1 to about 75); -NH₂; -NR*R** (R* and R** independently from each other representing linear or branched alkyl or hydroxy alkyl radicals having 1 to 10 carbon atoms, optionally forming a ring structure including additional nitrogen and/or or oxygen atoms); -phenyl; -amino(alkyl)phenyl; or mixtures thereof; and optionally
(c) providing at least one quaternization agent (component c),
(d) blending compounds (a), (b) and optionally (c) and subjecting them to condensation.

4. The process of Claim 3, wherein the polymer of step (d) is reacted with at least one pigment affinity agent (component d) selected from the group consisting of unsaturated carboxylic acids or their esters, carboxylic acid anhydrides, alkylglycidylethers, or mixtures thereof.

5. The process of Claim 3, wherein said bisglycidylethers (compound a) represent poly(tetramethylenoxide)diglycidylethers with about 2 to about 50 tetramethylenoxide units.

6. The process of claim 3, wherein said primary amines (compound b) follow general formula (III)
H₂N-(A)-O(PO)ₙ(EO)ₘB (III)
wherein (A) stands für a linear or branched alkylene radical having 1 to 6 carbon atoms, B stands for hydrogen or methyl, PO stands for a propylene oxide unit, EO stands for an ethylene oxide unit, n means zero or an integer of from 1 to about 20, and m an integer of from 1 to about 75.

7. The process of Claim 3, wherein said primary amines (component b) represent alkylamines, hydroxyalkylamines, arylamines or aralkylamines preferably selected from the group consisting of methyl amine, ethylamine, propylamine, butylamine, pentylamine, hexylamine, ethanolamine, propamolamine, butanolamine, benzylamine, or mixtures thereof.

8. The process of Claim 3, wherein said primary amines (component b) represent diamines preferably selected from the group consisting of dimethylaminopropylamine, aminopropylimidazolin, xylenediamine, hexamethylenediamine or mixtures thereof.

9. The process of Claim 3, wherein said secondary amines are selected from the group consisting of dimethylamine, diethylamine, dipropylamine, dibutylamine, dipropylamine, dihexylamine and mixtures thereof.

10. The process of Claim 3, wherein said quaternization agents (component c) are selected from the group consisting of alkyl chlorides, amineoxides, dialkylcarbonates, carboxylic acids and carboxylic acid amides and mixtures thereof.

11. The process of Claim 3, wherein pigment affinity agents (component d) are selected from the group consisting of methylacrylate, ethylacrylate, propylacrlate, butylacrylate, hexyl(meth)acrylate, octyl(meth)acrylate, 2-ethylhexyl(meth)acrylate, 2-ethylhexylglycidylether, decylglycidylether, dodecylglycidylether, acetanhydride, maleic anhydride, trimellitic anhydride and mixtures thereof.

12. The process of Claim 3, wherein said condensation is conducted at a temperature ranging from about 80 to about 160 °C.

13. Co-polymers according to at least one of the following structures:

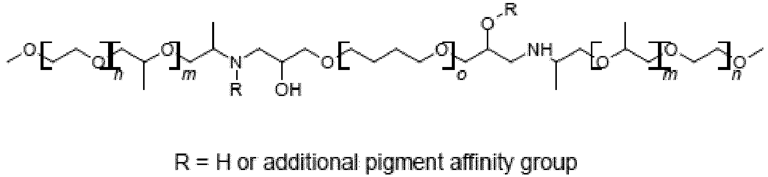

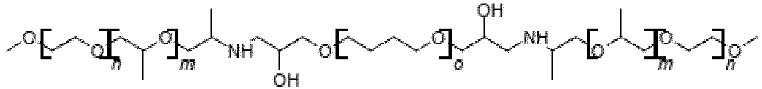

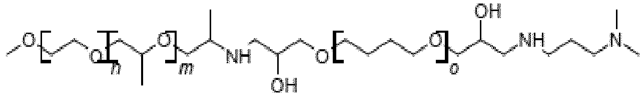

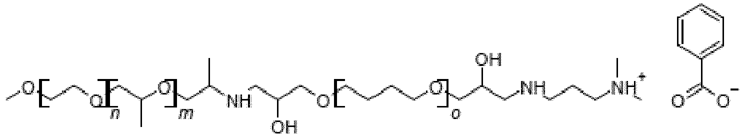

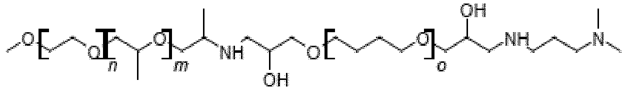

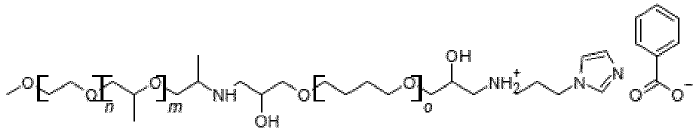

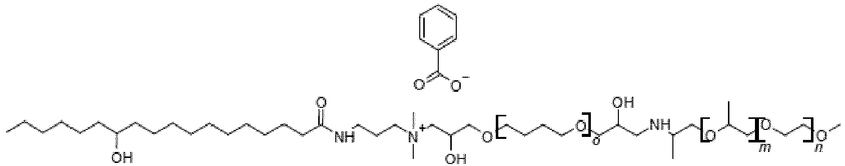

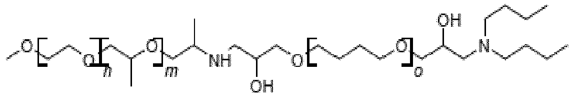

14. A method for dispersing a solid pigment in a liquid lacquer or paint or ink encompassing or consisting of the following steps:
(i) providing a liquid lacquer or paint or ink comprising solid pigments,
(ii) adding a working amount of at least one co-polymer according to any of the preceding Claims 1 to 13 optionally under agitation.

15. The use of the co-polymers according to any of the preceding Claims 1 to 13 as dispersing agents for pigments in lacquers paints and inks.
